# EUROPEAN PATENT APPLICATION

(11) **EP 1 274 206 A1**
(43) Date of publication of application: **08.01.2003**
(21) Application number: 02254356.5
(22) Date of filing: 21.06.2002
(51) Int. Cl.: H04L 12/64

(54) **Buffering in hybrid packet-TDM gateway**

(30) Priority: 06.07.2001 GB 0116538
(71) Applicant: Zarlink Semiconductor Limited, Swindon, Wiltshire SN4 2QW (GB)
(72) Inventor: Floyd, Geoffrey Edward, Devon, PL20 7LR (GB); Frost, Timothy Michael Edmund, Plymouth, PL6 7QE (GB); Kosolowski, James F., Woodlawn, Ontario KOA 3M (CA); Scott, Martin Raymond, Perranporth, Cornwall (GB)
(74) Representative: Asquith, Julian Peter

(57) **Abstract**

A TDM transmitter system for receiving packets of TDM data from a packet network and transmitting these on a TDM network, comprises:
a packet receiver (26,28) arranged to receive said packets from said packet network;
a buffer memory (30,32) for storing packets received by said receiver: and
a TDM transmitter (22,24) arranged to receive said packets from said memory buffer, convert these to TDM data for transmission on a TDM network, and transmit said TDM data on a TDM network;
and is characterised in that transmission by the TDM transmitter of the TDM data corresponding to the first packet is delayed for a programmable number of TDM frame periods.

## Description

The invention relates to systems and methods for transmitting data on a TDM network, where the data has been transmitted across a packet network.

TDM (Time Division Multiplex) networks are used to carry telephone calls, and require data to be transmitted at a constant bit rate in order to avoid interruptions to telephone calls.

A system to transmit constant bit rate TDM data across a packet network must meet the following requirements:
1. Transmit constant bit rate TDM data across a packet network so that it can be reconstructed as TDM data at the far end;
2. The TDM transmitter must not run short of data even if packet arrival is delayed due to congestion in the packet network.

A TDM receiver assembles incoming calls into packets. The receiver can handle several active packet streams at a time, where each packet stream represents a "virtual channel connection" or "context". The TDM transmitter performs the reverse function, extracting calls from packets.

The inventions seeks to provide an efficient way of buffering the packet data.

According to the invention there is provided a TDM transmitter system, a method of transmitting TDM data, and a system for transmitting constant bit rate TDM data across a packet network, as set out in the accompanying claims.

An embodiment of the invention will now be more particularly described, with reference to the accompanying drawings, in which:
Figure 1 is a schematic diagram showing data flow between TDM equipment;
Figure 2 is a more detailed diagram showing the TDM-IP conversion blocks of Figure 1;
Figure 3 shows regularly spaced packets leaving the TDM receiver shown in Figure 2; and
Figure 4 shows the packets of Figure 3 as they arrive at the packet receiver, following delays in the packet network, and also shows the play-out of TDM data by the TDM transmitter in accordance with the invention.

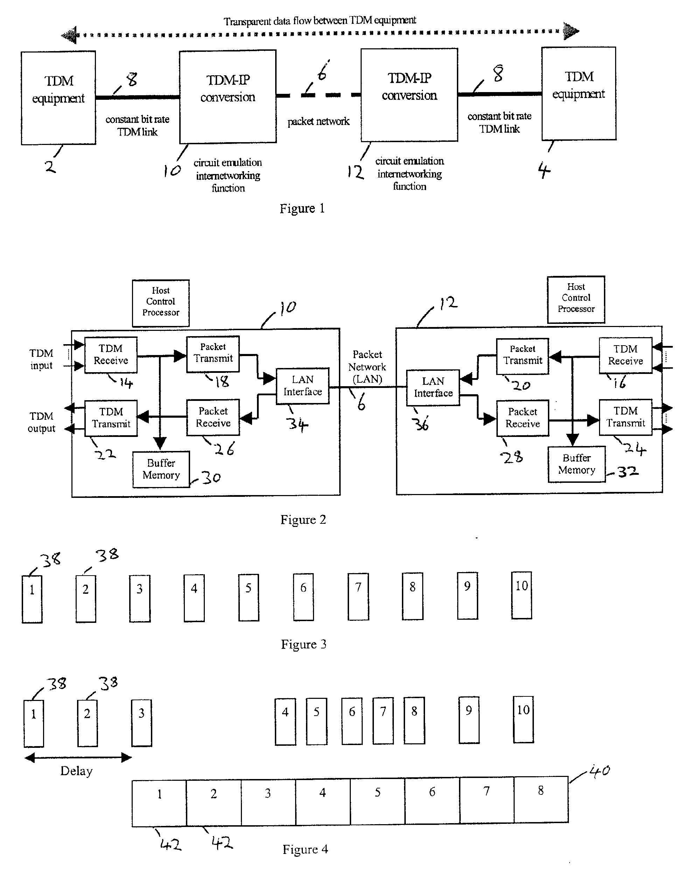

Figure 1 shows an overview of data flowing between first and second TDM equipment 2 and 4 (for example two telephones) across a packet network 6 indicated by dotted lines. The TDM data is required to flow across TDM networks 8 at a constant bit rate. Conversion of the TDM data to and from packets is carried out by first and second TDM-IP conversion blocks 10 and 12.

The TDM conversion blocks 10 and 12 are shown in greater detail in Figure 2. Because data must flow in both directions, each conversion block contains the same components. These components are TDM receivers 14 and 16, packet receivers 18 and 20, TDM transmitters 22 and 24, packet receivers 26 and 28, buffer memories 30 and 32, and LAN interfaces 34 and 36.

Data flows through the first and second conversion blocks 10 and 12 in both directions. For example, TDM data is received by the TDM receiver 14 of the first conversion block 10, where it is converted into packets of TDM data. These packets are stored in buffer memory 30 before being transmitted across the packet network 6 by packet transmitter 18. The packets are received by packet receiver 28 and then stored in buffer memory 32. TDM transmitter 24 then converts the packets back into normal TDM data and transmits the TDM data on a TDM network.

Figure 3 shows the regularly spaced packets 38 as they leave TDM receiver 14.

Latencies in the packet network 6 lead to jitter in the smooth arrival time of the packets 38. Figure 4 shows the packets 38 as they arrive at the TDM transmitter 24. Congestion in the network has delayed the arrival of packets 4, 5, 6 and 7.

The TDM transmitter 24 will run short of data in the buffer memory 32 after packet 3 due to the late arrival of packet 4. As a result the TDM transmitter 24 will not be able to output a smooth flow of TDM data.

In this embodiment of the invention the TDM transmitter 22 or 24 waits for a programmable number of TDM frame periods following arrival of the first packet for a new call before transmission of the TDM data from the first packet. If the TDM data represents speech sampled at 8 kHz, then the TDM frame period is 125µs. The delay commencing transmission allows the accumulation of jitter buffers in the buffer memories 30 and 32.

The lower part (labelled 40) of Figure 4 shows the play-out of the packets 38 by the TDM transmitter 24, that is the transmission of the TDM data on the TDM network. Figure 4 shows the transmitted TDM data divided into sections 42 each given a number corresponding to one of the packets 38. Only the first eight sections 42 are shown in Figure 4. Data on the TDM network is transmitted at a constant bit rate, so each section 42 of TDM data is shown of equal size, indicating an equal time duration being the TDM time frame.

Figure 4 shows the transmission of the first section 42, corresponding to the first packet 38, delayed by two TDM time frames, so that the late arrival of packet 4 no longer causes an interruption in the flow of TDM data.

It will be appreciated by those skilled in the art that the invention can be used with multiple packet streams, and that it can be used with any type of packet transmission system.

## Claims

1. A TDM transmitter system for receiving packets of TDM data from a packet network and transmitting these on a TDM network, the system comprising:
a packet receiver arranged to receive said packets from said packet network;
a buffer memory for storing packets received by said receiver: and
a TDM transmitter arranged to receive said packets from said memory buffer, convert these to TDM data for transmission on a TDM network, and transmit said TDM data on a TDM network;
**characterised in that** transmission by the TDM transmitter of the TDM data corresponding to the first packet is delayed for a programmable number of TDM frame periods.

2. A TDM transmitter system as claimed in claim 1, wherein said number of TDM frame periods is automatically determined by a computer.

3. A TDM transmitter system as claimed in claim 2, wherein the determination by said computer is made on the basis of the longest likely delay in the packet network being used to transmit the TDM data.

4. A method of transmitting TDM data on a TDM network, the method comprising:
receiving packets of TDM data from a packet network;
storing the packets in a buffer memory;
converting the packets to TDM data for transmission on a TDM network; and
transmitting the TDM data on the TDM network;
**characterised in that** transmission of the TDM data corresponding to the first packet is delayed for a programmable number of TDM frame periods.

5. A method as claimed in claim 4, wherein said number of TDM frame periods is automatically determined by a computer.

6. A method as claimed in claim 5, wherein the determination by said computer is made on the basis of the longest likely delay in the packet network being used to transmit the TDM data.

7. A system for transmitting constant bit rate TDM data across a packet network, the system comprising:
a TDM receiver arranged to assemble incoming TDM data into packets;
a packet transmitter arranged to transmit said packets across the packet network; and
a TDM transmitter system, comprising a packet receiver, buffer memory, and TDM transmitter, as claimed in any one of claims 1 to 3.
